# EUROPEAN PATENT SPECIFICATION

(11) **EP 4 299 279 B1**
(45) Date of publication and mention of the grant of the patent: **08.04.2026**
(21) Application number: 22759662.4
(22) Date of filing: 22.02.2022
(51) Int. Cl.: B29C 49/68, B29C 49/64, B29C 49/06

(54) **TEMPERATURE REGULATING MOLD, AND DEVICE AND METHOD FOR PRODUCING RESIN CONTAINER**
TEMPERATURREGELUNGSFORM SOWIE VORRICHTUNG UND VERFAHREN ZUR HERSTELLUNG EINES HARZBEHÄLTERS
MOULE DE RÉGULATION DE TEMPÉRATURE, ET DISPOSITIF ET MÉTHODE DE PRODUCTION DE RÉCIPIENT EN RÉSINE

(30) Priority: 25.02.2021 JP 2021028598
(43) Date of publication of application: 03.01.2024
(73) Proprietor: Nissei ASB Machine Co., Ltd., Komoro-shi, Nagano 384-8585 (JP)
(72) Inventor: SHIMADA, Kiyonori, Komoro-shi, Nagano 384-8585 (JP); KAWAMURA, Ryo, Komoro-shi, Nagano 384-8585 (JP); TAKAHASHI, Junji, Komoro-shi, Nagano 384-8585 (JP); ISHIZAKA, Kazuya, Komoro-shi, Nagano 384-8585 (JP)
(74) Representative: Mewburn Ellis LLP
(86) International application number: PCT/JP2022/007336
(87) International publication number: WO 2022/181627

(56) References cited:
- DE-T2- 69 601 913
- JP-A- 2000 127 230
- JP-A- 2003 526 544
- JP-A- H0 351 117
- JP-A- H06 285 965
- JP-A- H10 278 101
- JP-A- S5 789 929
- US-A- 5 292 243
- US-A1- 2016 144 552
- US-A1- 2016 144 552
- US-A1- 2018 257 264

## Description

### Technical Field

The present invention relates to a temperature adjustment mold, and a device and a method for manufacturing a resin container.

### Background Art

Conventionally, a hot parison type blow molding device has been known as one of devices for manufacturing a resin container. The hot parison type blow molding device is configured to blow mold a resin container using residual heat from injection molding of a preform, and is advantageous in that it is possible to manufacture a resin container that is diversified and excellent in aesthetic appearance as compared with a cold parison type.

In general, in the preform immediately after injection molding, some low-temperature parts extending in the axial direction exist in the circumferential direction, and temperature unevenness (uneven temperature) occurs in the circumferential direction. Thus, in the hot parison type blow molding cycle, a preform temperature adjusting step is performed between the injection molding step and the blow molding step in order to suppress uneven temperature of the preform or impart a desired temperature distribution suitable for shaping the container to the preform.

In this type of temperature adjusting step, for example, by using a cylindrical heating mold (heating pot mold) that accommodates the preform inside, the preform may be heated from the outer peripheral side by radiant heat from the heating pot mold so as to adjust the temperature. In this case, the uneven temperature of the preform is suppressed by disposing the cylindrical heating pot mold close to the low-temperature portion of the preform. In addition, it has also been proposed to adjust the temperature of the preform using a temperature control device in which a pair of heating blocks and a pair of cooling blocks are alternately disposed in the circumferential direction at the time of molding a flat container (for example, Patent Literature 1).

JPS5789929A essentially discloses a temperature adjustment mold for adjusting a temperature of a preform that is injection-molded, has a bottomed shape, and is made of resin, the temperature adjustment mold comprising:one or more adjusting portions that face a part of an outer peripheral surface of a body portion of the preform and locally heat a predetermined portion in a circumferential direction of the preform, whereina lower mold that faces a bottom portion of the preform and supports a lower end of the adjusting portion; andan upper mold that faces a neck portion of the preform and supports an upper end of the adjusting portion, whereinthe adjusting portion is sandwiched and positioned by the lower mold and the upper mold.

US 5 292 243 A essentially discloses a temperature adjustment mold for adjusting a temperature of a preform that is injection-molded, has a bottomed shape, and is made of resin, the temperature adjustment mold comprising:one or more adjusting portions that face a part of an outer peripheral surface of a body portion of the preform and locally heat a predetermined portion in a circumferential direction of the preform, whereinthe adjusting portion is disposed such that a gap is formed in the circumferential direction, and an attachment position is adjustable in the circumferential direction, andthe temperature adjustment mold further comprises:an upper mold that faces a neck portion of the preform and supports an upper end of the adjusting portion.

JPH06285965A discloses a preform temperature controlling mechanism which enables a change of the temperature of a preform conveyed to an orientation blow molding part, in a state wherein the temperature is controlled in a height direction, by selecting zones divided in the height direction and a circumferential direction. US2016/144552A1 discloses a device for heating thermoplastic preforms, including a heating channel formed from a heating module and through which the regions of the preforms to be heated are guided by a conveyor device.

US2018/257264A1 discloses a preform that comprises a neck portion having an opening, a cylindrical barrel portion, and a bottom portion larger in diameter than the barrel portion, and has a corner portion at a boundary between the barrel portion and the bottom portion.

DE69601913T2 discloses a device and method for producing plastic containers.

### Citation List

### Patent Literature

Patent Literature 1: JP 3595613 B2

### Summary of Invention

### Technical Problem

In the temperature adjustment using the conventional cylindrical heating pot mold, since a portion other than the low-temperature portion of the preform is also heated, it may be difficult to appropriately and sufficiently eliminate the uneven temperature. In addition, when the portion of the preform corresponding to the long side of the container can be selectively heated at the time of molding a flat container, the thickness distribution of the container can be improved. Thus, a temperature adjustment mold capable of selectively heating a predetermined portion in the circumferential direction of the preform is desired.

### Solution to Problem

One aspect of the present invention is a temperature adjustment mold as specified in claim 1.

A second aspect of the present invention is a device for manufacturing a resin container as specified in claim 3.

A third aspect of the present invention is a method for manufacturing a resin container as specified in claim 4.

### Advantageous Effects of Invention

According to one aspect of the present invention, a predetermined portion in the circumferential direction of the preform can be selectively heated.

### Brief Description of Drawings

Fig. 1 is a diagram schematically illustrating a configuration of a blow molding device of the present embodiment.
Fig. 2 is a longitudinal sectional diagram of a temperature adjusting portion.
Fig. 3 is an exploded perspective diagram illustrating a configuration example of a temperature adjustment mold of the temperature adjusting portion.
Fig. 4 is a diagram illustrating a disposition example of a middle mold of the temperature adjusting portion.
Fig. 5 is a flowchart illustrating steps of a blow molding method.

### Description of Embodiments

Hereinafter, an embodiment of the present invention will be described with reference to the drawings.

In the embodiment, for the sake of easy description, structures and elements other than a main part of the present invention will be described in a simplified or omitted manner. In addition, in the drawings, the same elements are denoted by the same reference numerals. Note that the shapes, dimensions, and the like of the elements illustrated in the drawings are schematically illustrated, and do not indicate actual shapes, dimensions, and the like.

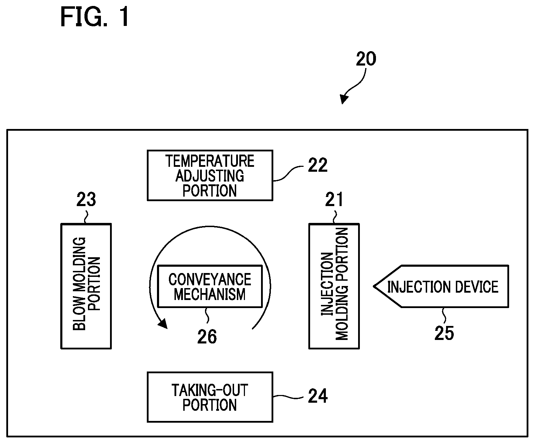

Fig. 1 is a diagram schematically illustrating a configuration of a blow molding device 20 of the present embodiment. The blow molding device 20 of the present embodiment is a hot parison type (also referred to as a one-stage type) device that blow-molds a container by utilizing residual heat (internal heat quantity) from injection molding without cooling a preform 10 to room temperature.

The blow molding device 20 includes an injection molding portion 21, a temperature adjusting portion 22, a blow molding portion 23, a taking-out portion 24, and a conveyance mechanism 26. The injection molding portion 21, the temperature adjusting portion 22, the blow molding portion 23, and the taking-out portion 24 are disposed at positions rotated a predetermined angle (for example, 90 degrees) about the conveyance mechanism 26.

### (Conveyance Mechanism 26)

The conveyance mechanism 26 includes a transfer plate 28 (not illustrated in Fig. 1) that moves to rotate about an axis in a direction perpendicular to the plane of paper of Fig. 1. On the transfer plate 28, one or more neck molds 27 (not illustrated in Fig. 1) for holding the neck portion of the preform 10 or a resin container (hereinafter, simply referred to as the container) are disposed at each predetermined angle. The conveyance mechanism 26 conveys the preform 10 (or the container) having the neck portion held by the neck mold 27 in the order of the injection molding portion 21, the temperature adjusting portion 22, the blow molding portion 23, and the taking-out portion 24 by rotating the transfer plate 28 90 degrees. Note that the conveyance mechanism 26 further includes a lifting and lowering mechanism (vertical mold opening/closing mechanism) and a mold opening mechanism of the neck mold 27, and also performs an operation of lifting and lowering the transfer plate 28 and an operation related to mold closing and mold opening (demolding) in the injection molding portion 21 or the like.

### (Injection Molding Portion 21)

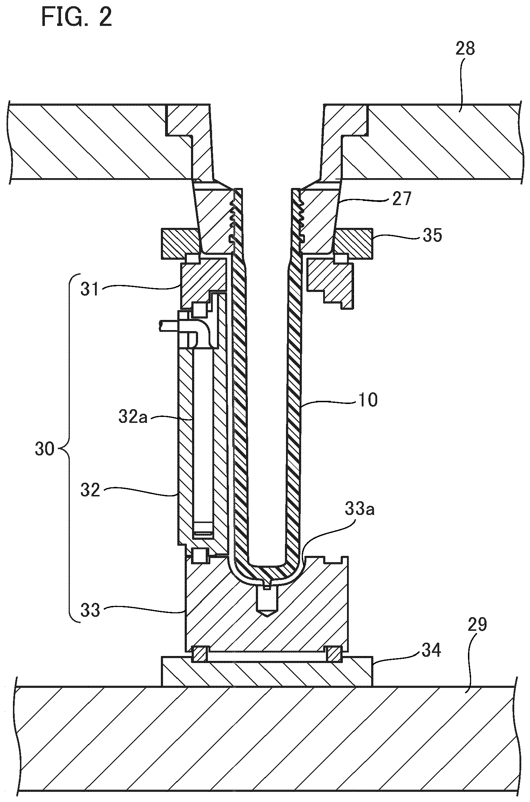

The injection molding portion 21 includes an injection cavity mold and an injection core mold, which are not illustrated, and manufactures the preform 10 illustrated in Fig. 2. An injection device 25 that supplies a resin material, which is a raw material of the preform 10, is connected to the injection molding portion 21.

In the injection molding portion 21, the injection cavity mold, the injection core mold, and the neck mold 27 of the conveyance mechanism 26 described above are closed to form a mold space having a preform shape. Then, by pouring the resin material from the injection device 25 into such a mold space having a preform shape, the preform 10 is manufactured by the injection molding portion 21.

For example, the overall shape of the preform 10 is a bottomed cylindrical shape in which one end side is opened and the other end side is closed. The neck portion is formed at an end portion of the preform 10 on the opening side.

In addition, the material of the container and the preform 10 is a thermoplastic synthetic resin and can be appropriately selected according to the usage of the container. Specific examples of the material type include polyethylene terephthalate (PET), polyethylene naphthalate (PEN), polycyclohexanedimethylene terephthalate (PCTA), Tritan ((registered trademark): copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate: acrylic (PMMA), polylactic acid (PLA), and the like.

Note that even when the mold of injection molding portion 21 is opened, the neck mold 27 of the conveyance mechanism 26 is not opened, and the preform 10 is held and conveyed as it is. The number of preforms 10 simultaneously molded by the injection molding portion 21 (that is, the number of containers that can be simultaneously molded by the blow molding device 20) can be appropriately set.

### (Temperature Adjusting Portion 22)

The temperature adjusting portion 22 includes a temperature adjustment mold 30 capable of accommodating the preform 10. The temperature adjusting portion 22 performs temperature equalization and uneven temperature removal on the preform 10 manufactured by the injection molding portion 21 with the temperature adjustment mold 30 to adjust the temperature of the preform 10 to have a temperature suitable for blow molding (for example, about 90°C to 105°C) and a temperature distribution suitable for a container shape to be shaped. In addition, the temperature adjusting portion 22 also has a function of cooling the preform 10 in a high temperature state after injection molding. Note that although not particularly limited, the temperature adjusting portion 22 may further include a temperature adjustment mold member (temperature adjusting rod: not illustrated) inserted into the preform 10.

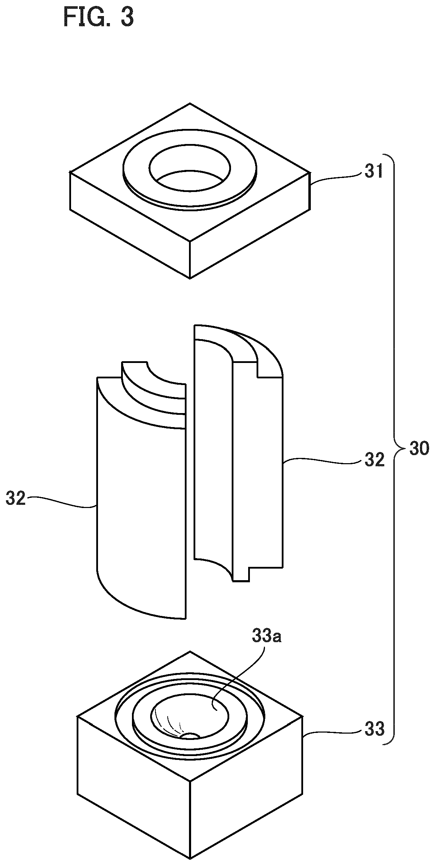

Fig. 2 is a longitudinal sectional diagram of the temperature adjusting portion 22. Fig. 3 is an exploded perspective diagram illustrating a configuration example of the temperature adjustment mold 30 of the temperature adjusting portion 22.

The temperature adjustment mold 30 is configured to be divided into at least three in an axial direction (vertical direction) of the preform 10, and includes an upper mold 31, a middle mold 32, and a lower mold 33 in order from the upper side. The lower mold 33 is placed on a support base 34 fixed on a base 29, and an upper support plate 35 is disposed on the upper surface side of the upper mold 31. The support base 34 and the upper support plate 35 are coupled by a plurality of support pillars (not illustrated) extending along the axial direction of the preform 10. Therefore, the upper mold 31, the middle mold 32, and the lower mold 33 are sandwiched between the support base 34 and the upper support plate 35 to be fixed in a positioned state.

The upper mold 31 is a mold facing (opposing) the outer peripheral surface in the vicinity of the neck portion of the preform 10, and has a circular opening through which the preform 10 can be inserted. A heating member (not illustrated) such as a band heater (ring-shaped heater) is attached to the upper mold 31, and the temperature of the upper mold 31 can be adjusted to a predetermined temperature by the heating member. In addition, the upper mold 31 is in contact with the upper end of the middle mold 32 to support the middle mold 32.

The lower mold 33 is a mold facing (opposing) the outer peripheral surface of the bottom portion of the preform 10, and has a concave curved surface 33a following the shape of the bottom portion of the preform 10 on the upper surface side. A heating member (not illustrated) such as a band heater is attached to the lower mold 33, and the temperature of the lower mold 33 can be adjusted to a predetermined temperature by the heating member. In addition, the lower mold 33 is in contact with the lower end of the middle mold 32 to support the middle mold 32.

The middle mold 32 is an example of an adjusting portion (adjustment member), and is a mold that is disposed between the upper mold 31 and the lower mold 33 and faces (opposes) the outer peripheral surface of the body portion of the preform 10. Note that the bottom surface of the upper mold 31 and the upper surface of the middle mold 32, and the bottom surface of the middle mold 32 and the upper surface of the lower mold 33 are engaged in a spigot joint structure so as to sandwich a heat insulating member therebetween, for example.

As illustrated in Figs. 2 and 3, the middle mold 32 is formed of a belt-shaped piece having an arcuate shape in plan view (at least an inner peripheral surface facing the preform 10 is arcuate) and having a constant axial length. Further, the middle mold 32 may have a shape having a constant thickness in a radial direction. For example, the middle mold 32 is a belt-shaped piece having a quadrant shape in plan view, and can cover 1/4 of the outer periphery of the preform 10. In addition, as illustrated in Fig. 2, the middle mold 32 incorporates a heating member 32a such as a rod-shaped heater, and the temperature of the middle mold 32 can be adjusted to a predetermined temperature by the heating member 32a.

One or more middle molds 32 are disposed in the circumferential direction of the preform so as to partially cover the outer peripheral surface of the body portion of the preform 10. That is, a gap is formed in the circumferential direction of the temperature adjustment mold 30 at a portion where the middle mold 32 is not disposed. Since the middle mold 32 is partially disposed in the circumferential direction, the body portion of the preform 10 is temperature-adjusted by the temperature adjustment mold 30 as described below.

First, in a portion facing the middle mold 32 in the circumferential direction, the body portion of the preform 10 is heated by heat from the middle mold 32. On the other hand, in a portion where the middle mold 32 is not disposed in the circumferential direction, the body portion of the preform 10 is not heated but naturally cooled by heat dissipation to the air. As a result, in the temperature adjustment mold 30, it is possible to suppress excessive heating of portions other than a desired portion while selectively heating the desired portion in the circumferential direction, and it is easy to bring the temperature distribution in the circumferential direction of the preform 10 close to a desired state.

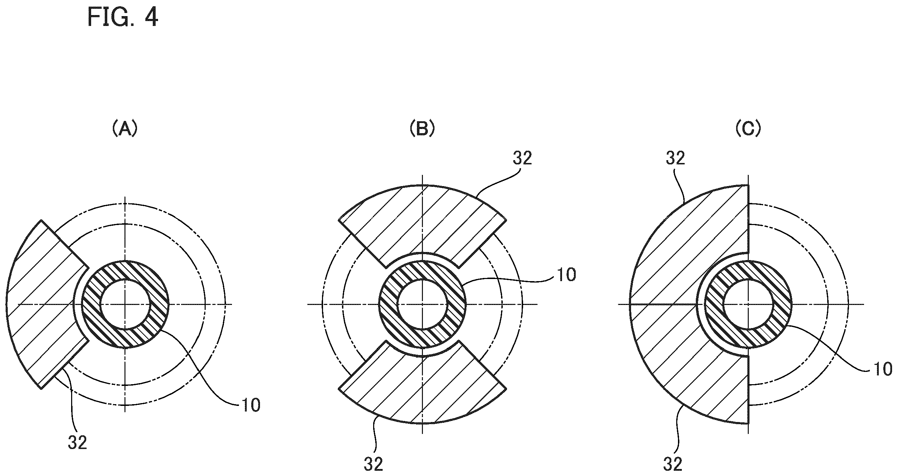

Fig. 4 is a diagram illustrating a disposition example of the middle mold 32 of the temperature adjusting portion 22.

Fig. 4(A) illustrates an example in which one middle mold 32 is disposed. In the case of Fig. 4(A), the body portion of the preform 10 is heated by the middle mold 32 in a part in the circumferential direction of the preform 10 (in the drawing, the part positioned on the left side with respect to the preform 10 in a range of 90 degrees in the circumferential direction of the preform 10). In addition, in a range where the middle mold 32 is not disposed in the circumferential direction of the preform 10, the body portion of the preform 10 is naturally cooled by heat dissipation to the air.

In addition, Fig. 4(B) illustrates an example in which two middle molds 32 are disposed to be opposite to each other with a gap in the circumferential direction so as to be point-symmetric. In the case of Fig. 4 (B), the body portion of the preform 10 is heated by the middle molds 32 at each of two places in the circumferential direction of the preform 10 (in the drawing, the parts positioned on the upper side and the lower side with respect to the preform 10 in a range of 90 degrees in the circumferential direction of the preform 10). On the other hand, in a range where the middle mold 32 is not disposed in the circumferential direction of the preform 10, the body portion of the preform 10 is naturally cooled by heat dissipation to the air.

In addition, Fig. 4(C) illustrates an example in which two middle molds 32 are disposed adjacent to each other. In the case of Fig. 4(C), the body portion of the preform 10 is heated by the middle molds 32 in the left half in the drawing. On the other hand, the body portion of the preform 10 is naturally cooled by heat dissipation to the air in the right half in the drawing.

Note that the disposition of the middle mold 32 illustrated in each drawing of Fig. 4 is merely an example, and the position of the middle mold 32 can be appropriately changed according to the state of uneven temperature of the preform 10, the specifications of the container to be shaped, and the like. For example, when the two middle molds 32 are disposed apart from each other with a gap in the circumferential direction, the middle molds 32 may be disposed to be displaced from the point-symmetric position. In addition, three middle molds 32 may be disposed in the circumferential direction.

### (Blow Molding Portion 23)

Returning to Fig. 1, the blow molding portion 23 performs stretch blow molding on the preform 10 the temperature of which has been adjusted by the temperature adjusting portion 22 to manufacture a container.

The blow molding portion 23 includes a blow cavity mold that is a pair of split molds corresponding to the shape of the container, a bottom mold, a stretching rod, and an air introduction member (blow core mold; all of which are not illustrated). The blow molding portion 23 performs blow-molding while stretching the preform 10. As a result, the preform 10 can be shaped into the shape of the blow cavity mold to manufacture a container.

### (Taking-Out Portion 24)

The taking-out portion 24 is configured to release the neck portion of the container manufactured by the blow molding portion 23 from the neck mold 27 and take out the container to the outside of the blow molding device 20.

### (Description of Blow Molding Method)

Next, a blow molding method by the blow molding device 20 of the present embodiment will be described.

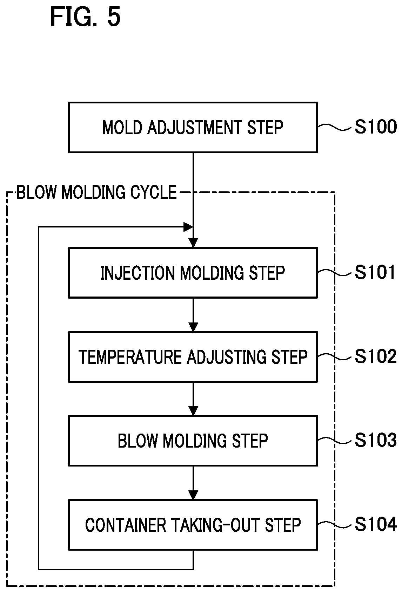

Fig. 5 is a flowchart illustrating steps of a blow molding method. In the present embodiment, before each step (S101 to S104), which will be described below, of the blow molding method is performed, a mold adjustment step (S100) of adjusting the temperature adjustment mold 30 is performed.

### (Step S100: Mold Adjustment Step)

The mold adjustment step is a step of adjusting the temperature adjustment mold 30 of the temperature adjusting portion 22 according to the uneven temperature of the preform 10 and the shape of the container to be shaped.

As an example, in the case of suppressing the uneven temperature of the preform 10, the operation described below is performed in the mold adjustment step. In the description described below, it is assumed that the temperature distribution of the preform 10 and the thickness distribution of the container in the circumferential direction are adjusted so as to be less uneven.

First, the blow molding device 20 is subjected to a test operation to obtain information of the temperature distribution of the preform 10 or information of the thickness distribution of the container before adjustment.

For example, when the temperature distribution is uneven in the circumferential direction of the preform 10, the operator adjusts the position of the middle mold 32 of the temperature adjustment mold 30 so as to face the low-temperature portion of the preform 10. As a result, a portion having a low temperature in the circumferential direction of the preform 10 during the test operation is locally heated by the middle mold 32, and the uneven temperature in the circumferential direction of the preform 10 decreases.

In addition, when the temperature adjustment mold 30 is adjusted on the basis of the thickness distribution of the container manufactured by the test operation, it is sufficient if the adjustment is performed as described below.

In the one-stage type blow molding, a high-temperature portion of the preform 10 has a large residual heat, and the preform 10 is easily stretched. That is, a portion where the thickness of the container is thin corresponds to a portion where the temperature of the preform 10 is high. On the other hand, the low-temperature portion of the preform 10 has less residual heat than the high-temperature portion of the preform 10, and the preform 10 is less likely to be stretched. That is, a portion where the thickness of the container is thick corresponds to the low-temperature portion of the preform 10.

Therefore, when the temperature adjustment mold 30 is adjusted on the basis of the thickness distribution of the container, it is sufficient if the position of the middle mold 32 is adjusted in the same manner as described above by regarding a portion where the thickness of the container is thin as a high-temperature portion of the preform 10 and regarding a portion where the thickness of the container is thick as a low-temperature portion of the preform 10.

In addition, as another example, when the temperature adjustment mold 30 is adjusted according to the shape of the container to be shaped, the operator adjusts the position of the middle mold 32 in the circumferential direction so as to face a portion having a high stretch ratio in the circumferential direction of the preform 10. For example, when an eccentric container is molded, the temperature adjustment mold 30 is adjusted such that the middle mold 32 faces a corresponding portion on the container long diameter side. As a result, the residual heat of the preform 10 at the portion having a high stretch ratio is increased, and the preform 10 suitable for the container shape is easily deformed, so that the thickness distribution of the container can be improved.

Here, when the temperature adjustment mold 30 is assembled, first, the lower mold 33 is placed on the support base 34. Next, the middle mold 32 is disposed between the upper mold 31 and the lower mold 33, and a columnar member (not illustrated) is disposed between the upper mold 31 and the lower mold 33 at a place where the middle mold 32 is not disposed. Then, the upper support plate 35 is disposed from the upper side of the upper mold 31, and the upper support plate 35 and the support base 34 are coupled by support pillars (not illustrated) to sandwich and position and fix the temperature adjustment mold 30. Note that the columnar member may be removed from between the upper mold 31 and the lower mold 33.

When the mold adjustment step described above is completed, each step of the blow molding cycle described below is executed.

### (Step S101: Injection Molding Step)

In Step S101, in the injection molding portion 21, a resin is injected from the injection device 25 into the mold space having a preform shape formed by the injection cavity mold, the injection core mold, and the neck mold 27 of the conveyance mechanism 26 to manufacture the preform 10.

In step S101, when the injection molding of the preform 10 is completed, the mold of injection molding portion 21 is opened, and the preform 10 is demolded from the injection cavity mold and the injection core mold. Next, the transfer plate 28 of the conveyance mechanism 26 moves so as to rotate a predetermined angle, and the preform 10 held by the neck mold 27 is conveyed to the temperature adjusting portion 22.

### (Step S102: Temperature Adjusting Step)

Subsequently, in the temperature adjusting portion 22, temperature adjustment for bringing the temperature of the preform 10 close to a temperature suitable for final blowing is performed.

As illustrated in Fig. 2, in the temperature adjusting step, the preform 10 is accommodated in the temperature adjustment mold 30. As a result, the temperature of the preform 10 after injection molding is adjusted by the temperature adjustment mold 30 so that the temperature distribution in the circumferential direction becomes a desired state.

After the temperature adjusting step, the transfer plate 28 of the conveyance mechanism 26 moves so as to rotate a predetermined angle, and the preform 10 that is held by the neck mold 27 and the temperature of which has been adjusted is conveyed to the blow molding portion 23.

### (Step S103: Blow Molding Step)

Subsequently, the blow molding of the container is performed in the blow molding portion 23.

First, the blow cavity mold is closed, the preform 10 is accommodated in the mold space, and the air introduction member (blow core) is lowered, so that the air introduction member contacts the neck portion of the preform 10. Then, the stretching rod (longitudinal stretching member) is lowered to hold the bottom portion of the preform 10 from the inner surface, longitudinal stretching is performed as necessary, and the blowing air is supplied from the air introduction member to perform lateral stretching of the preform 10. As a result, the preform 10 is inflated and shaped so as to be in close contact with the mold space of the blow cavity mold, and is blow-molded into the container. Note that the bottom mold is caused to stand by at a lower position at which the bottom mold does not contact the bottom portion of the preform 10 before mold closing of the blow cavity mold, and is quickly raised to the molding position before closing the mold or after closing the mold.

### (Step S104: Container Taking-Out Step)

When the blow molding is ended, the blow cavity mold and the bottom mold are opened. As a result, the container becomes movable from the blow molding portion 23.

Subsequently, the transfer plate 28 of the conveyance mechanism 26 moves to rotate a predetermined angle, and the container is conveyed to the taking-out portion 24. In the taking-out portion 24, the neck portion of the container is released from the neck mold 27, and the container is taken out to the outside of the blow molding device 20.

Thus, the series of steps of the blow molding cycle ends. Thereafter, by moving the transfer plate 28 of the conveyance mechanism 26 to rotate a predetermined angle, the steps of S101 to S104 described above are repeated. During the operation of the blow molding device 20, the manufacture of four sets of containers having a time difference of one step is executed in parallel.

Hereinafter, operations and effects of the present embodiment will be described.

The temperature adjustment mold 30 of the present embodiment is configured to include one or more middle molds 32 that face a part of the outer peripheral surface of the body portion of the preform 10 and locally heat a predetermined portion in the circumferential direction. In the present embodiment, by adjusting the attachment position of the middle molds 32 in the circumferential direction so as to face the low-temperature portion of the preform 10, it is possible to suppress the uneven temperature in the circumferential direction of the preform 10.

In addition, at the time of molding the eccentric container, the attachment position of the middle molds 32 in the circumferential direction is adjusted such that the middle molds 32 face a portion corresponding to the container long diameter side, and the temperature distribution in the circumferential direction of the preform 10 can be in a state suitable for shaping the container, and the thickness distribution of the container can be improved.

In the present embodiment, in a region where the middle mold 32 is not disposed, the preform 10 is not heated but is naturally cooled by heat dissipation to the air. Thus, it is possible to suppress excessive heating of a portion that does not require heating in the circumferential direction of the preform 10, and it is easy to appropriately control the temperature distribution in the circumferential direction of the preform 10. In addition, as compared with the configuration in which heating is performed entirely in the circumferential direction, it is possible to suppress the consumption energy in the temperature adjustment mold 30.

Here, when the material of the preform 10 is polyethylene (PE) or high density polyethylene (HDPE), a temperature suitable for blow molding is close to the melting point. Moreover, it is known that these materials have less strain hardening property than PET and the like, and it is difficult to adjust the thickness during blow molding. The strain hardening property refers to a property of increasing the strength by molecular orientation until the thickness becomes uniform in such a manner that the weakest portion (usually the hottest part) of the preform first reaches the yield point and the next weakest portion starts to stretch during the blowing process. Thus, in the case of blow molding the preform of PE or HDPE, temperature adjustment before blowing is very important, but according to the present embodiment, temperature adjustment of the preform suitable for container molding of PE or HDPE can be easily performed.

The present invention is not limited to the above-described embodiment, and various improvements and design changes may be made without departing from the scope of the claims.

In the above embodiment, the case where the circumferential length of the middle mold 32 is in a range of 90 degrees in the circumferential length of the preform 10 (a quadrant in plan view) has been described, but the circumferential length of the middle mold 32 can be appropriately changed. For example, the middle mold 32 having a circumferential length corresponding to a range of 45 degrees to 180 degrees (preferably a range of 60 degrees to 120 degrees) in the circumferential length of the preform 10 may be used. In addition, the temperature distribution in the circumferential direction of the preform 10 may be adjusted by selecting and using one or more (for example, one to four) middle molds 32 from a plurality of types of middle molds 32 having different circumferential lengths. In this case, a plurality of middle molds 32 having different circumferential lengths may be used in combination.

In addition, in the above embodiment, the example of using the preform 10 having a circular cross section has been described, but a preform having a cross section other than a circular cross section may be used. For example, when a flat container is manufactured, a preform having a substantially rectangular cross section may be used.

Additionally, the embodiment disclosed herein is to be considered in all respects as illustrative and not restrictive. The scope of the present invention is indicated not by the above-described description but by the claims, and it is intended that all modifications within the scope of the claims are included.

### Reference Signs List

- 10: Preform
- 20: Blow molding device
- 21: Injection molding portion
- 22: Temperature adjusting portion
- 23: Blow molding portion
- 30: Temperature adjustment mold
- 31: Upper mold
- 32: Middle mold
- 33: Lower mold

## Claims

1. A temperature adjustment mold (30) for adjusting a temperature of a preform (10) that is injection-molded, has a bottomed shape, and is made of resin, the temperature adjustment mold comprising:
one or more adjusting portions (22) that face a part of an outer peripheral surface of a body portion of the preform and locally heat a predetermined portion in a circumferential direction of the preform, wherein
the adjusting portion is disposed such that a gap is formed in the circumferential direction, and an attachment position is adjustable in the circumferential direction, and
the temperature adjustment mold further comprises:
a lower mold (33) that faces a bottom portion of the preform and supports a lower end of the adjusting portion; and
an upper mold (31) that faces a neck portion of the preform and supports an upper end of the adjusting portion, wherein
the adjusting portion is sandwiched and positioned by the lower mold and the upper mold.

2. The temperature adjustment mold according to claim 1, wherein a plurality of the adjusting portions is disposed with a gap in the circumferential direction.

3. A device (20) for manufacturing a resin container, the device comprising:
an injection molding portion (21) that injection-molds a preform (10) that has a bottomed shape and is made of resin;
a temperature adjusting portion (22) that adjusts a temperature distribution in a circumferential direction with respect to the preform including residual heat from injection molding by using the temperature adjustment mold according to claim 1 or 2; and
a blow molding portion (23) that blow-molds the preform adjusted in temperature to manufacture a resin container.

4. A method for manufacturing a resin container, the method comprising:
an injection molding step of injection-molding a preform (10) that has a bottomed shape and is made of resin;
a temperature adjusting step of adjusting a temperature distribution in a circumferential direction with respect to the preform including residual heat from injection molding by using the temperature adjustment mold (30) according to claim 1 or 2; and
a blow molding step of blow-molding the preform adjusted in temperature to manufacture a resin container.

## Patentansprüche

1. Temperatureinstellungsform (30) zur Einstellung der Temperatur eines Vorformlings (10), der spritzgegossen ist, eine Gestalt mit Boden aufweist und aus Harz besteht, wobei die Temperatureinstellungsform Folgendes umfasst:
einen oder mehreren Einstellungsabschnitte (22), die einem Teil einer Außenumfangsfläche eines Körperabschnitts des Vorformlings zugewandt sind und einen vorbestimmten Abschnitt in Umfangsrichtung des Vorformlings lokal erwärmen, wobei
der Einstellungsabschnitt so angeordnet ist, dass ein Spalt in der Umfangsrichtung gebildet ist, und eine Befestigungsposition in Umfangsrichtung einstellbar ist, und
die Temperatureinstellungsform weiters Folgendes umfasst:
eine untere Form (33), die einem unteren Abschnitt des Vorformlings zugewandt ist und das untere Ende des Einstellungsabschnitts stützt; und
eine obere Form (31), die einem Halsabschnitt des Vorformlings zugewandt ist und das obere Ende des Einstellungsabschnitts stützt,
wobei
der Einstellungsabschnitt zwischen der unteren Form und der oberen Form eingeklemmt und durch diese positioniert ist.

2. Temperatureinstellungsform nach Anspruch 1, wobei eine Vielzahl der Einstellungsabschnitte mit einem Spalt in Umfangsrichtung angeordnet ist.

3. Vorrichtung (20) zur Herstellung eines Harzbehälters, wobei die Vorrichtung Folgendes umfasst:
einen Spritzgießabschnitt (21), der einen Vorformling (10) spritzgießt, der eine Gestalt mit Boden aufweist und aus Harz besteht;
einen Temperatureinstellungsabschnitt (22), der die Temperaturverteilung in Umfangsrichtung in Bezug auf den Vorformling, einschließlich Restwärme vom Spritzgießen, unter Verwendung einer Temperatureinstellungsform nach Anspruch 1 oder 2 einstellt; und
einen Blasformabschnitt (23), der den Vorformling mit eingestellter Temperatur blasformt, um einen Harzbehälter herzustellen.

4. Verfahren zur Herstellung eines Harzbehälters, wobei das Verfahren Folgendes umfasst:
einen Spritzgießschritt des Spritzgießens eines Vorformlings (10), der eine Form mit Boden aufweist und aus Harz besteht;
einen Temperatureinstellungsschritt des Einstellens der Temperaturverteilung in Umfangsrichtung in Bezug auf den Vorformling, einschließlich Restwärme vom Spritzgießen, unter Verwendung einer Temperatureinstellungsform (30) nach Anspruch 1 oder 2; und
einen Blasformschritt des Blasformens des Vorformlings mit eingestellter Temperatur, um einen Harzbehälter herzustellen.

## Revendications

1. Moule d'ajustement de température (30) pour ajuster une température d'une préforme (10) qui est moulée par injection, qui présente une forme munie d'un fond et est constituée de résine, le moule d'ajustement de température comprenant :
une ou plusieurs parties d'ajustement (22) qui font face à une partie d'une surface périphérique extérieure d'une partie de corps de la préforme et chauffent localement une partie prédéterminée dans une direction circonférentielle de la préforme, dans lequel
la partie d'ajustement est disposée de telle sorte qu'un espace est formé dans la direction circonférentielle, et une position de fixation est ajustable dans la direction circonférentielle, et
le moule d'ajustement de température comprend en outre :
un moule inférieur (33) qui fait face à une partie inférieure de la préforme et supporte une extrémité inférieure de la partie d'ajustement ; et
un moule supérieur (31) qui fait face à une partie de col de la préforme et supporte une extrémité supérieure de la partie d'ajustement, dans lequel
la partie d'ajustement est enserrée et positionnée par l'intermédiaire du moule inférieur et du moule supérieur.

2. Moule d'ajustement de température selon la revendication 1, dans lequel une pluralité des parties d'ajustement sont disposées avec un espace dans la direction circonférentielle.

3. Dispositif (20) pour la fabrication d'un récipient en résine, le dispositif comprenant :
une partie de moulage par injection (21) qui moule par injection une préforme (10) qui présente une forme munie d'un fond et est réalisée en résine ;
une partie d'ajustement de température (22) qui ajuste une distribution de température dans une direction circonférentielle par rapport à la préforme incluant de la chaleur résiduelle provenant du moulage par injection en utilisant le moule d'ajustement de température selon la revendication 1 ou 2 ; et
une partie de moulage par soufflage (23) qui moule par soufflage la préforme ajustée en température pour fabriquer un récipient en résine.

4. Procédé de fabrication d'un récipient en résine, le procédé comprenant :
une étape de moulage par injection consistant à mouler par injection une préforme (10) qui présente une forme munie d'un fond et est réalisée en résine ;
une étape d'ajustement de température consistant à ajuster une distribution de température dans une direction circonférentielle par rapport à la préforme incluant de la chaleur résiduelle provenant d'un moulage par injection en utilisant le moule d'ajustement de température (30) selon la revendication 1 ou 2 ; et
une étape de moulage par soufflage consistant à mouler par soufflage la préforme ajustée en température pour fabriquer un récipient en résine.
